# EUROPEAN PATENT APPLICATION

(11) **EP 1 282 033 A2**
(43) Date of publication of application: **05.02.2003**
(21) Application number: 02254734.3
(22) Date of filing: 05.07.2002
(51) Int. Cl.: G06F 3/033

(54) **Computer display having selective area magnification**

(30) Priority: 24.07.2001 US 912749
(71) Applicant: Hewlett-Packard Company, Palo Alto, CA 94304 (US)
(72) Inventor: Yin, Memphis Zhihong, Corvallis, OR 97330 (US)
(74) Representative: Jackson, Richard Eric

(57) **Abstract**

A method for displaying symbols (140, 150) on a computer display (110) is disclosed. The method includes positioning a pointer (160) at a spot on the display (110), wherein the display (110) displays the symbols using a first symbol size. The method also includes receiving an input that causes symbols within an area (170) of the display (110) nearby the spot to be displayed using a size greater than the first symbol size while symbols outside the area (170) are displayed using a size that is different than the greater size.

## Description

### BACKGROUND OF THE INVENTION

The invention relates generally to the field of computers and, more particularly, to the display of information on a display of a computer.

Computers, such as portable, laptop, and desktop computers, as well as handheld computing devices, have gained in popularity at least in part due to their ability to run many types of computer programs. A laptop computer, for example, can simultaneously run messaging, computer aided design, and word processing programs. Computers continue to gain in popularity as they become capable of running increasingly diverse types of programs, as well as being able to run these programs simultaneously.

Another contributor to the popularity of computing devices is the availability of a desktop-based graphical user interface. This interface allows elements of information, including icons, symbols, and characters, to be displayed on a computer monitor or display as components of an office desktop. This enables a user to run a particular computer program by selecting the element using a graphical input device to select a particular symbol displayed on the desktop. The use of an application window, within which the computer program runs, can be adjusted in size while displaying a portion of the computers desktop. This ability to interact with the computer program by way of the application window while viewing other portions of the computers desktop further enhances the appeal and ease of use of computers.

However, as the number of computer programs capable of running on a computing device increases, the computer display can become increasingly populated with information elements both on the desktop and within the various application windows within which programs may be running. Additionally, since the screen size of the computer display has remained constant or even decreased in size, the size of the individual information elements displayed decreases in size as the desktop becomes more crowded with information elements. Thus, a need arises for a computer display to have the ability for selective display area magnification.

### BRIEF DESCRIPTION OF THE DRAWINGS

Figure 1 shows a portable computer displaying various information elements in accordance with a preferred embodiment of the invention;
Figure 2 shows the computer display desktop of Figure 1 in greater detail in accordance with a preferred embodiment of the invention;
Figure 3 shows the computer display desktop of Figure 1 having selective display area magnification in accordance with a preferred embodiment of the invention;
Figure 4 shows a display of a list of operator selections that control attributes of the selective display area of Figure 3 in accordance with a preferred embodiment of the invention;
Figure 5 is a block diagram that shows a system for selective display area magnification in accordance with a preferred embodiment of the invention;
Figure 6 shows the use of selective display area magnification in a computer program for designing electrical circuits, in accordance with a preferred embodiment of the invention;
Figure 7 shows the use of selective display area magnification in a computer program for designing a 3-dimensional mechanical apparatus, in accordance with a preferred embodiment of the invention;
Figure 8 shows the use of selective display area magnification in a computer program that performs word processing, in accordance with a preferred embodiment of the invention;
Figure 9 is a flowchart of a first method for performing selective display area magnification in accordance with a preferred embodiment of the invention;
Figure 10 is a flowchart of a second method for performing selective display area magnification in accordance with a preferred embodiment of the invention; and
Figure 11 is a flowchart of a third method for performing selective display area magnification in accordance with a preferred embodiment of the invention.

### DESCRIPTION OF THE PREFERRED EMBODIMENTS

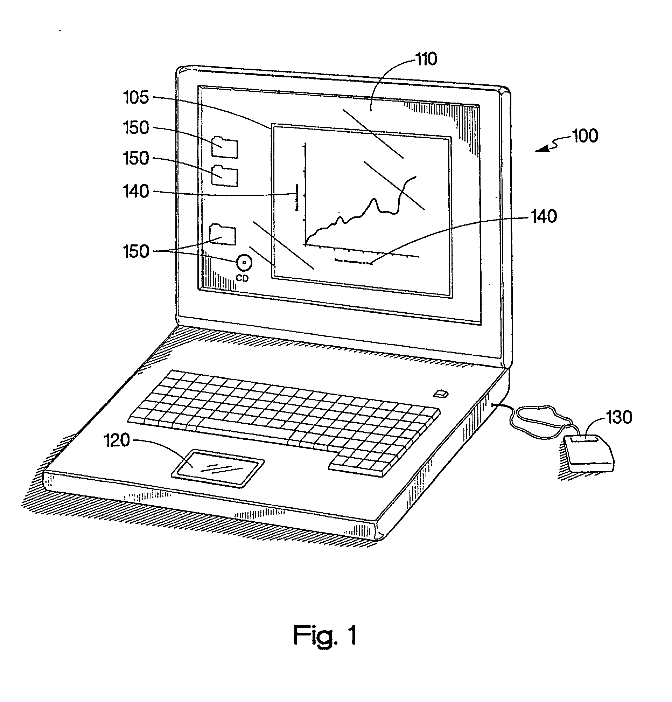

Figure 1 shows a computer (100) displaying various information elements in accordance with a preferred embodiment of the invention. In Figure 1, application window 105 displays a graph having horizontal and vertical axes. Information elements 140 are labels that identify the data presented in each of the horizontal and vertical axes of the graph presented within application window 105. In addition to displaying application window 105, display 110 also presents information elements 150. Information elements 150 represent computer files that are desirably accessible to a user by way a graphical input device that moves a pointer around the desktop area displayed on display 110. In Figure 1, one or both of touchpad 120 and mouse 130 may perform the graphical input function, although computer 100 may make use of other input devices, such as a trackpad, touch screen, or keyboard, to generate and convey inputs to computer 100.

In Figure 1, information elements 140 present information in the form of alphabetical characters. However, in other embodiments of the invention, other types of information elements can be used to present information other than alphabetical characters. Thus, embodiments of the invention may be used with information elements that are symbols representing portions of an article of manufacture, including electrical circuit elements used in computer programs for the design of electrical equipment or contour lines used in computer programs for the design of 3-dimensional mechanical structures. Additionally, these information elements can include numbers, icons that represent individual computer programs, or any other information that may be meaningful to the user of computer 100.

In Figure 1, information elements 150 represent computer files available to the user. These elements are preferably selectable by way of moving a pointer (not shown in Figure 1) to the appropriate one or more of information elements 150 and selecting the appropriate element. Thus, information elements 150 can be icons or symbols that represent directories holding various types of files. Additionally, information elements 150 can be symbols or icons that represent a variety of programs such as a compact disc player that runs on computer 100, as well as spreadsheet, word processing, graphics, computer aided design programs, and so forth.

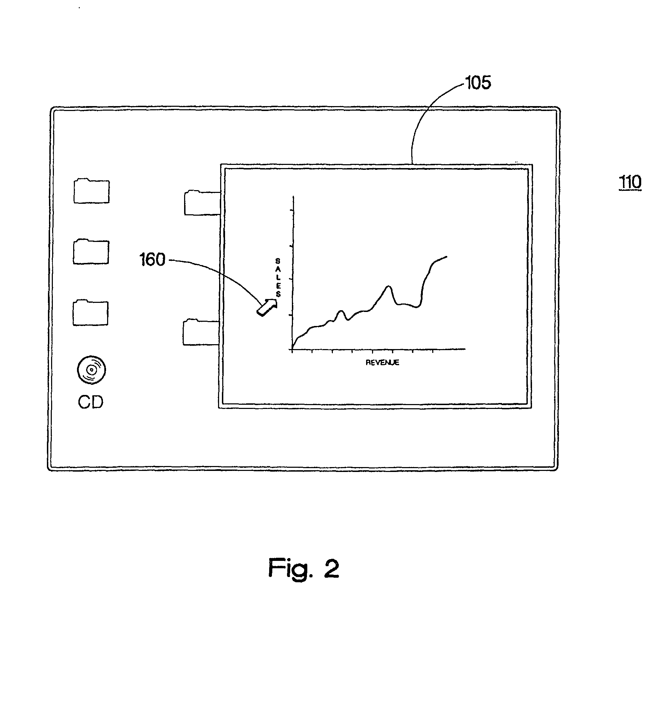

Figure 2 shows the computer display desktop of Figure 1 in greater detail in accordance with a preferred embodiment of the invention. In Figure 2, pointer 160 is positioned at a spot just beneath the word "SALES", which describes the data presented on the vertical axis of the graph shown within application window 105. Preferably, pointer 160 is located at a spot that can be positioned at various locations within the boundaries of display 1 10 under the control of a user of computer 100. Although shown as an arrow in Figure 2, pointer 160 can also be an "I-Beam" pointer that positions a cursor among characters arranged in a program that performs functions such as word processing, spread sheets, or Internet Web browsing.

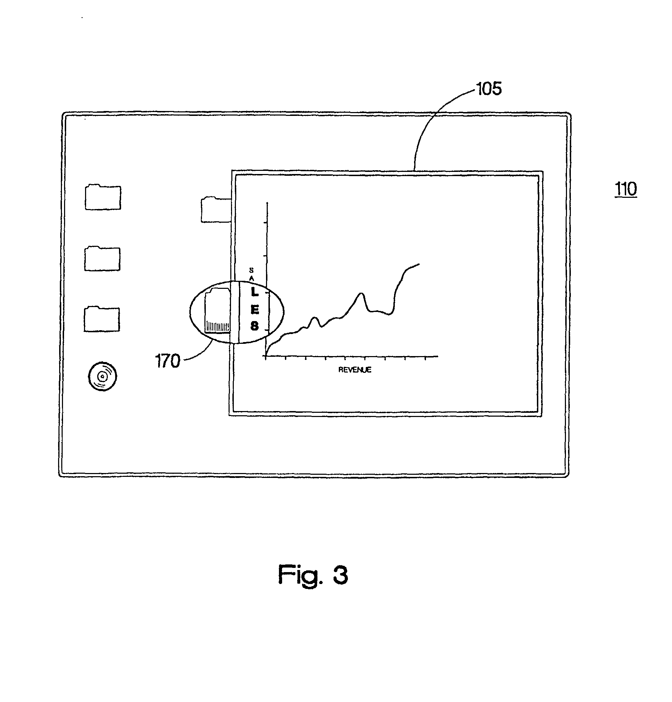

Figure 3 shows the computer display desktop of Figure 1 having selective display area magnification in accordance with a preferred embodiment of the invention. In Figure 3, area 170 replaces arrow 160 (of Figure 2) or the I-beam discussed in reference to Figure 2. Desirably, area 170 is initially located near the spot previously occupied by arrow 160, or may surround the spot previously occupied by the arrow. Area 170 represents a focus region located within the boundaries of display 110, preferably under the control of a user of computer 100. Area 170 represents an area of selective display area magnification. Within area 170, information elements, such as icons, characters, symbols, numbers, and so forth, are magnified relative to information elements outside area 170.

In Figure 3, the focus region of area 170 is shown as having an elliptical shape. However, area 170 can also be shaped as a circle, rectangle, polygon, or may possess any other shape. Desirably, the location of area 170 is controlled by way of a graphical input device, which positions area 170 to various or perhaps to any location within the boundaries of display 110. In Figure 3, area 170 is shown as magnifying a region that includes a portion of the vertical axis of the graph within application window 105, a portion of the identifier of the vertical axes ("SALES"), as well as magnifying an edge of application window 105, and a portion of one of information elements 150 located on the desktop portion of display 110.

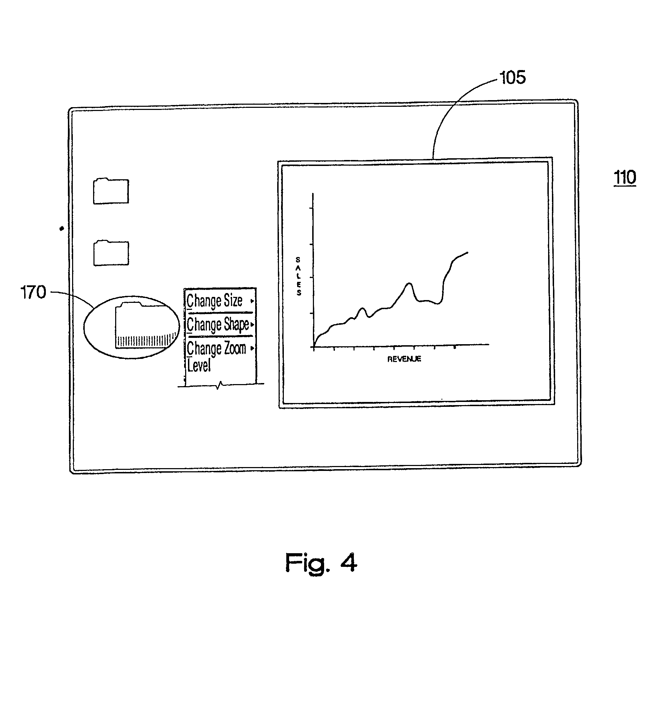

Figure 4 shows a display of a list of operator selections that control attributes of the selective display area of Figure 3 in accordance with a preferred embodiment of the invention. Desirably, these attributes are controlled by way of an input selector, such as one or more buttons located on mouse 130, or adjacent to touchpad 120, (shown in Figure 1). Preferably, the input selector allows the user to change the size of area 170, to change the shape of area 170, to change the magnification level ("zoom") of area 170, or to bring about another change in a characteristic of the information elements that lie within area 170. Alternatively, these changes may be brought about by way of depressing a key on the keyboard of an associated computing device, such as a function key (such as F1 through F12 on many standard keyboards) or by depressing a key that has been adapted or configured for use with controlling attributes of area 170.

Area 170 may also be created and modified through the use of Multi-Touch technology such as that produced by FingerWorks Inc. at 798 Taylors Bridge Rd.
Townsend, Delaware 19734 (www.fingerworks.com). The use of hardware and software components that include Multi-Touch technology can be used to create and modify area 170 using hand gestures that recognize and track hand and finger motion. These hand gestures are translated into keyboard and mouse commands and conveyed to an associated computer in a manner that may be similar to the manner in which keyboard and mouse inputs are conveyed.

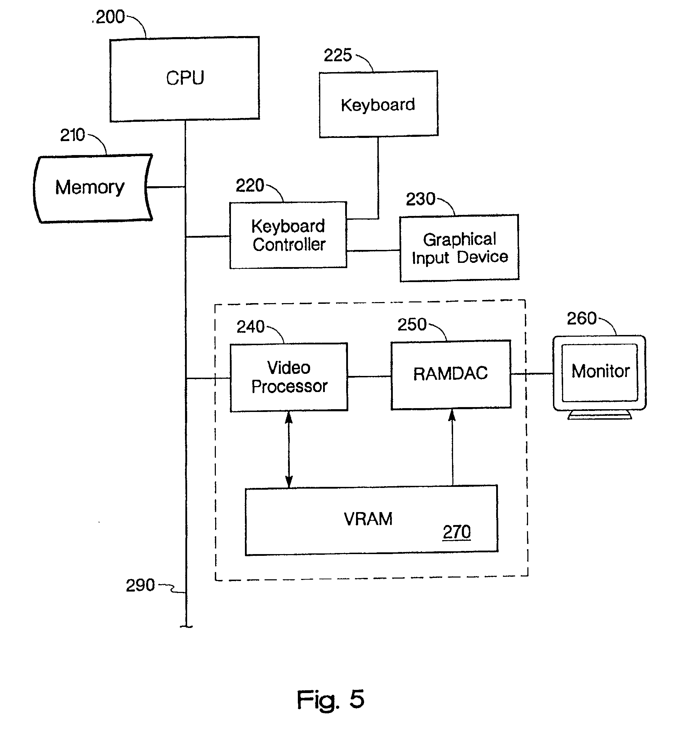

Figure 5 is a block diagram that shows a system for selective display area magnification in accordance with a preferred embodiment of the invention. In Figure 5, an operating system that runs on central processing unit (CPU) 200 controls and directs the operations of memory 210. Memory 210 represents one of several types of memory including volatile and nonvolatile memory. The operating system that runs on CPU 200 further directs the operations of keyboard controller 220 and video processor 240 by way of bus 290.

Keyboard controller 220 receives inputs from graphical input device 230, which can be a mouse, touchpad, or other device that permits a user to locate a pointer or indicator within the bounds of the display desktop area displayed by monitor 260. Keyboard controller 220 also receives commands from keyboard 225 and conveys these to CPU 200 under the control of the operating system.

Monitor 260 can be any type of monitor capable of displaying one or more types of information elements, such as information elements 140 and 150, as well as application windows, such as application window 105 of Figure 1. Monitor 260 can incorporate flat panel technology such as liquid crystal, light emitting diodes, cathode ray tubes, or other display technology. Desirably, monitor 260 performs at least some functions similar to those performed by display 110.

Video processor 240, also coupled to CPU 200, preferably provides the rendering and video processing of information elements conveyed from keyboard controller 220 and from CPU 200 under the control of the operating system that runs on the CPU. Video processor 240 writes frames for display on monitor 260 to video random access memory (VRAM) 270. Random access memory digital to analog converter (RAMDAC) 250 converts the digitally formatted information stored in VRAM 270 to an analog format for display on monitor 260.

In Figure 5, commands for creating selective display area magnification are generated by keyboard 225 or graphical input device 230 in response to a user input and under the control of the operating system. The user input can be a selection available on keyboard 225 or graphical input device 230. The user input desirably starts a process that runs within the operating system executed by CPU 200 to replace the pointer or indicator controlled by graphical input device 230 with the selective display area or focus region. Additionally the process enables information elements within the selective display area within the boundaries of monitor 260 to be rendered using a preferably larger size than information elements outside the area or focus region. The process being executed within the operating system running on CPU 200 desirably also allows the user to make selections that influence the position of the selective display area displayed on monitor 260 as well as to control the size and shape of the display area.

In another embodiment, video processor 240 runs the process that enables information elements within a selective display area or focus region within the boundaries of monitor 260 to be rendered using a larger element size than information elements outside the area or focus region. This can be brought about by dynamically modifying the contents of memory areas within VRAM 270 that correspond to the selective display area to be magnified. The process desirably also allows the user to make selections that influence the position of the selective display area on monitor 260 as well as to control the size and shape of the area. Preferably, this process also allows the pointer or indicator controlled by graphical input device 230 to be replaced by the selective area of magnification. The process running on video processor 240 can be a thread that is executed as part of an operating system that supports multiprocessor environments, or can be run as a stand-alone program that runs on video processor 240.

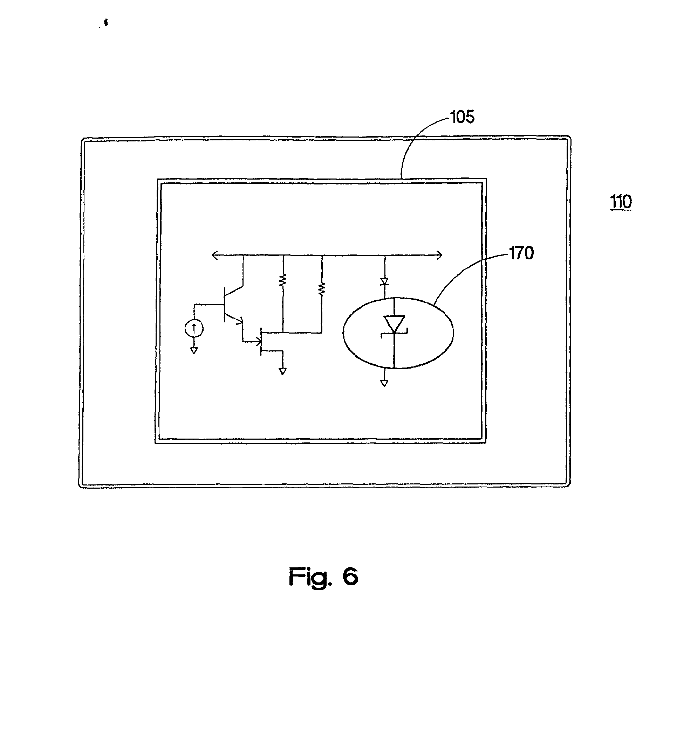

Figure 6 shows the use of selective display area magnification in a computer program for designing electrical circuits, in accordance with a preferred embodiment of the invention. In Figure 6, a zener diode is shown as being enlarged by positioning area 170 at the appropriate location within application window 105 of display 110. Preferably, a graphical input device, such as a mouse, touch pad, or keypad, is used to create area 170 and to locate the area within application window 105. The graphical input device may also be used to influence the size and shape of area 170, as well as to influence the magnification level of information elements within area 170.

In Figure 6, the components of the electrical circuit shown within application window 105 correspond to the information elements (140) displayed within the application window (105) of Figure 2. The magnification of the information elements within area 170 allows the user to view a large portion of the contents of an electrical circuit while also being able to view smaller portions of the electrical circuit as well as single components such as the zener diode shown.

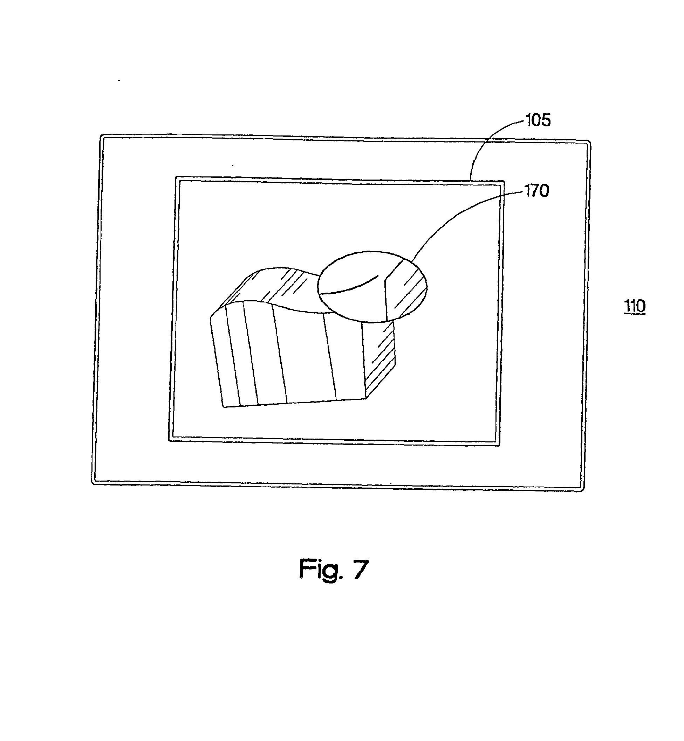

Figure 7 shows the use of selective display area magnification in a computer program for designing a 3-dimensional mechanical apparatus, in accordance with a preferred embodiment of the invention. In Figure 7, the computer program running within application window 105 of display 110 is a computer aided design program used to design a 3-dimensional mechanical apparatus. Preferably, a graphical input device, such as a mouse, touch pad, or keyboard, is used to create area 170 and to locate the area within application window 105. The graphical input device may also be used to influence the size, shape, and magnification level of information elements within area 170.

In Figure 7, area 170 has been placed over a particular vertex to determine if the contour lines, which represent a surface of the 3-dimensional mechanical apparatus, are joined at the vertex. In Figure 7, the contour lines shown within application window 105 correspond to the information elements (140) displayed within application window 105 of Figure 2. Thus, the magnification of information elements within area 170 allows a large portion of the 3-dimensional mechanical apparatus to be viewed within application window 105 while being able to view smaller portions of the 3-dimensional mechanical apparatus in greater detail.

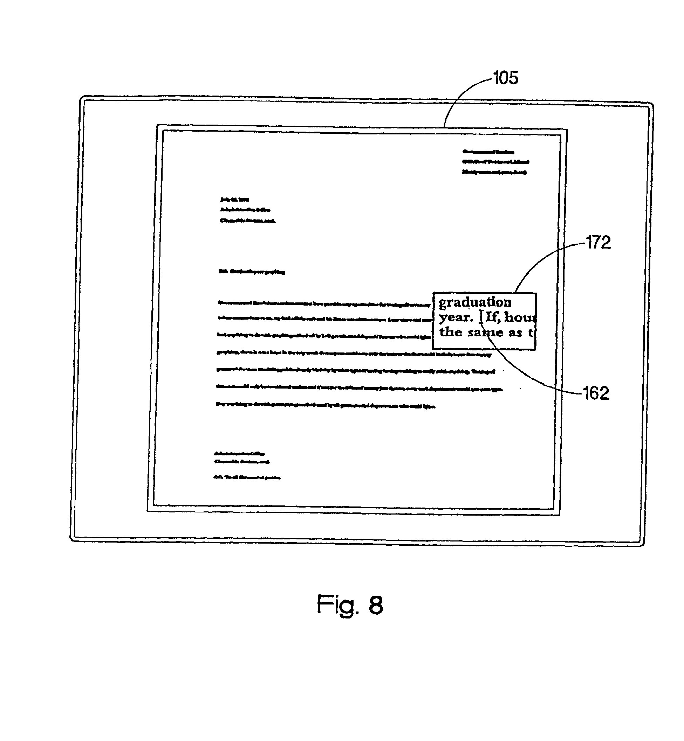

Figure 8 shows the use of selective display area magnification in a computer program that performs word processing, in accordance with a preferred embodiment of the invention. In Figure 8, the computer program functioning within application window 105 is a word processing program. In Figure 8, area 172 is rectangular area that includes I-Beam pointer 162. Preferably, a graphical input device, such as a mouse, touch pad, or keyboard, is used to create area 172 and to locate the area within application window 105. The graphical input device may also be used to influence the size, shape, and magnification level of information elements within area 172. The creation of an area of selective display area magnification, such as area 172, allows the user to view a portion of a document while being able to view the details of smaller portions within the document.

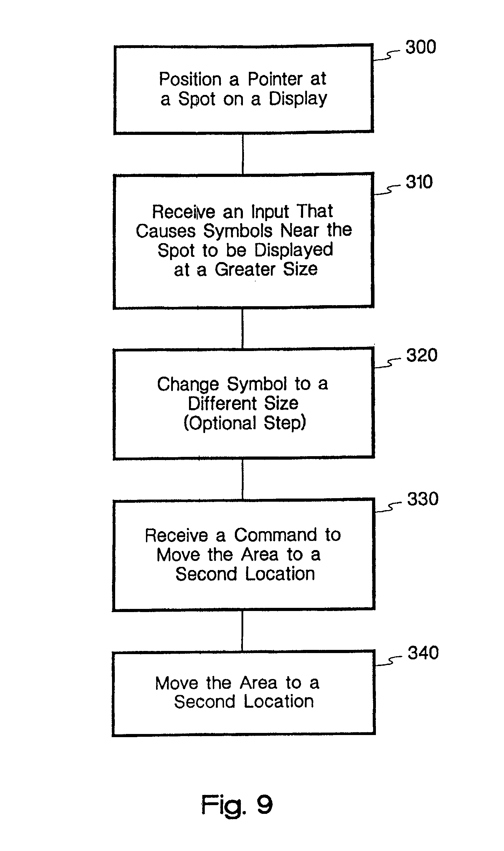

Figure 9 is a flowchart of a first method for performing selective display area magnification in accordance with a preferred embodiment of the invention. At block 300, a pointer is positioned at a spot on a display. Preferably, the display displays symbols rendered wsing a first symbol size. These symbols can be one of various information elements such as those previously discussed herein.

At block 310, the display receives an input that causes symbols near the spot to be displayed using a size greater than the first symbol size while symbols outside the area are displayed using a size different than the size of those symbols within the area. The size at which elements outside the area are displayed is preferably the first symbol size. At block 320 the user may optionally change the size of the symbols within the area to a different size. This change in size can be brought about through the use of a graphical pointing device or by interacting with a keyboard that influences the information displayed on the display.

In block 330, the display receives a command to move the area to a second location. This location can desirably be any location within the boundaries of the desktop displayed on the display. In response to the command received in block 330, the area is moved to a second location, at block 340.

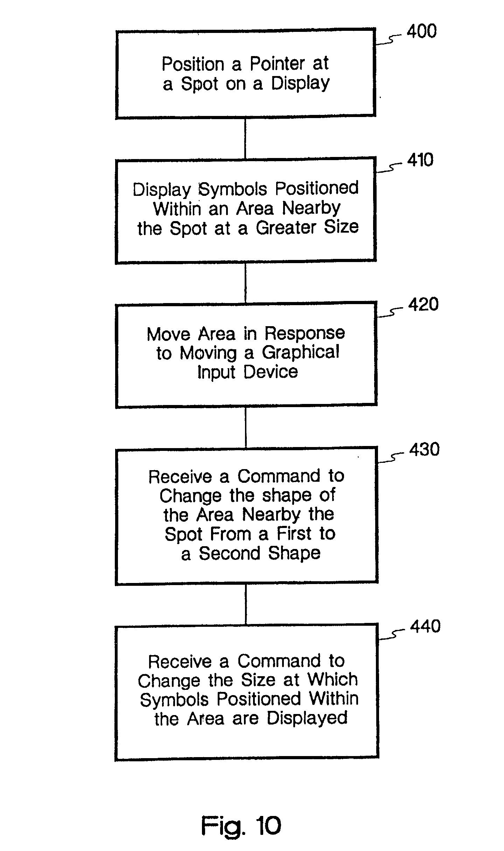

Figure 10 is a flowchart of a second method for performing selective display area magnification in accordance with a preferred embodiment of the invention. In block 400, a computer positions a pointer at a spot on a display. At block 410, the symbols positioned within an area nearby the spot are displayed using a greater size. At block 420, the area is moved in response to receiving a command from a graphical input device. At block 430, the computer receives a command to change the shape of the area nearby the spot from a first shape to a second shape. At block 440, the computer receives a command to change the size at which symbols positioned within the area are displayed.

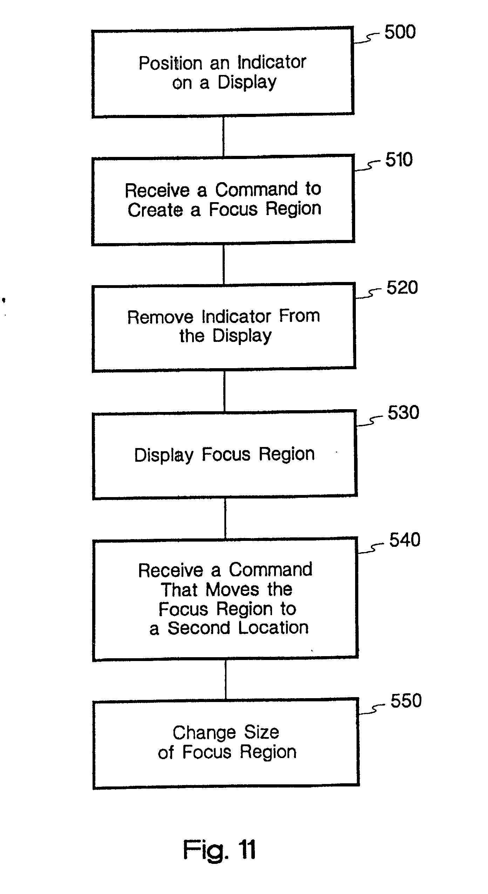

Figure 11 is a flowchart of a third method for performing selective display area magnification in accordance with a preferred embodiment of the invention. The method of Figure 11 is suitable for writing on one or more computer readable media having computer readable instructions thereon which, when executed by a computer, cause the computer to perform the method. The method starts at block 500 in which an indicator is positioned on a display. Preferably, the display displays information elements, such as alphanumeric characters and symbols that represent computer programs. At block 510, the computer receives a command to create a focus region. Desirably, the command received in block 510 is conveyed by way of a graphical input device. In response to receiving the command, the computer removes the indicator from the display at block 520.

At block 530 a focus region is displayed. The focus region can surround the spot corresponding the location of the indicator displayed in block 500 and may be shaped as an ellipse, circle, rectangle, or other shape. Alternatively, the focus region can be displayed at a location that is nearby the location of the indicator displayed in block 500. Also in block 530, information elements within the focus region are magnified relative to information elements outside the focus region. The method continues at block 540, which includes receiving a command that moves the focus region to a second location, wherein the second location can be anywhere within the boundaries of the display. At block 550, the size of the focus region is changed, preferably by way of receiving a command from a graphical input device.

## Claims

1. A method for displaying symbols (140, 150) on a display (110), comprising:
positioning a pointer (160) at a spot on said display (110), wherein said display (110) displays said symbols using a first symbol size; and
receiving an input that causes symbols (140, 150) within an area (170) of said display (110) nearby said spot to be displayed using a size greater than said first symbol size while symbols outside said area (170) are displayed using a size that is different than said greater size.

2. The method of claim 1 wherein said different size is said first symbol size.

3. The method of claim 1 wherein said area (170) surrounds said spot on said display.

4. The method of claim 1 wherein said symbols (140, 150) are alphanumeric characters.

5. The method of claim 1 wherein said symbols (140, 150) represent computer programs.

6. A computing system that modifies the size of icons displayed on a display (110), comprising:
a monitor (260) that displays information elements (140, 150) using a first element size;
a graphical input device (230) that influences the positioning of an indicator (160) on said monitor (260); and
a processor (200) coupled to said graphical input device (230) and coupled to said monitor (230) that accepts an input that renders information elements proximate to said indicator (160) to be presented using a second element size that is greater than said first element size.

7. The computing system of claim 6 wherein said graphical input device (230) is a mouse.

8. The computing system of claim 6 wherein said graphical input device (230) is a touchpad.

9. The computing system of claim 6 wherein said information elements (140, 150) proximate to said indicator (160) lie within an area that surrounds said indicator (160).

10. The computing system of claim 9 wherein said area that surrounds said indicator (160) has an elliptical shape.
